# EUROPÄISCHE PATENTSCHRIFT

(11) **EP 2 265 522 B1**
(45) Veröffentlichungstag und Bekanntmachung des Hinweises auf die Patenterteilung: **31.08.2011**
(21) Anmeldenummer: 09735330.4
(22) Anmeldetag: 21.04.2009
(51) Int. Cl.: B65G 17/32, B65G 35/08

(54) **TRÄGER UND VERFAHREN ZUM TRANSPORTIEREN EINES BEHÄLTERS**
CARRIER AND METHOD FOR TRANSPORTING A CONTAINER
SUPPORT ET PROCÉDÉ DE TRANSPORT D'UN RÉCIPIENT

(30) Priorität: 22.04.2008 DE 102008020117
(43) Veröffentlichungstag der Anmeldung: 29.12.2010
(73) Patentinhaber: Krones AG, 93073 Neutraubling (DE)
(72) Erfinder: MEINZINGER, Rupert, 94356 Kirchroth (DE); NEUBAUER, Michael, 93053 Regensburg (DE)
(74) Vertreter: Grünecker, Kinkeldey, Stockmair & Schwanhäusser Anwaltssozietät
(86) Internationale Anmeldenummer: PCT/EP2009/002905
(87) Internationale Veröffentlichungsnummer: WO 2009/130004

(56) Entgegenhaltungen:
- EP-A- 0 680 925
- WO-A-02/100745
- WO-A-03/091109
- GB-A- 2 264 486
- US-B1- 6 293 387

## Beschreibung

Die Erfindung betrifft einen Träger gemäß Oberbegriff des Patentanspruchs 1.

In Behälter-Behandlungsvorrichtungen, beispielsweise in Verbindung mit Flaschen-Füllvorrichtungen, ist das sogenannte Neckhandling üblich, bei dem jede Flasche an einem am Flaschenhals angeformten Ringflansch von einem Förderelement, z.B. einem Klammergreifer, gehalten wird, während sie durch oder zu Stationen transportiert wird. Ferner ist das sogenannte Basehandling üblich, bei dem jede Flasche stehend, beispielsweise auf einem Transportband, gefördert und gegebenenfalls sogar unten gehalten wird.

GB 2 264 486 A offenbart ein Träger gemäß dem Oberbegriff des Anspruchs 1.

Bei dem aus GB 2 264 486 A bekannten Träger zum Neckhandling jedes Behälters beim Transport ist die Basis mit dem plattenförmigen Haltemittel über drei parallele, teleskopartig längenverstellbare Säulen verbunden. An den Säulen ist zwischen der Basis und dem Haltemittel ein Plattenkörper angeordnet. An einem Sockel der Basis und dem Haltekörper können quer zur Längsachse des Behälters an der Behälteraußenwand angreifende Halteteile austauschbar angebracht werden.

Ein aus US 6 293 387 B1 bekannter Träger zum Transportieren von Phiolen entlang einer Transportstrecke und vorbei an Bearbeitungsstationen weist einen kreiszylindrischen Grundkörper auf. An einer Längsseite ist der Grundkörper geöffnet, um eine Aufnahmevertiefung für eine Phiole zu bilden. An der Oberseite des Grundkörpers ist ein Fortsatz zum Ergreifen des Halses der Phiole vorgesehen, während in der Vertiefung Außenwände der Phiole kontaktierende Bereiche geformt sind. Der Grundkörper steht auf der Förderstrecke in formschlüssigem Eingriff mit Transportmitteln. Der Träger passt zu nur einem Phiolentyp.

Weiterer Stand der Technik ist enthalten in WO 02/100745 A1, WO 03/091109 A1, EP 0 680 925 A und auch in DE 696 02 976 T, DE 692 28 884 T, WO 05/110851 A, US 2 463 651 A, DE 42 10 387 A und US 4 982 869 A.

Für nicht standfähige Behälter ist es bekannt, jeden Behälter mit einem Träger, einem sogenannten Carrier, zu transportieren, der mit seiner Basis auf der Förderfläche einer Förderstrecke steht und frei stehend gefördert wird (EP-A-0 222 175). Der Träger ist als eine Art Adapter außen passend zur Förderstrecke und innen passend zu möglichst verschiedenen Behältern gestaltet. Der bekannte Träger ist nach oben offen, damit der Behälter von oben eingesetzt und nach oben entnommen werden kann, und besitzt an der Basis Haltemittel, die beim Transport an einem untenliegenden Bereich des Behälters angreifen und diesen im Träger abstützen. Die in Transportrichtung vorderen und hinteren Seiten der Basis sind gleichartig konvex gerundet, so dass bei Hintereinandertransport die Träger stumpf aneinander anstehen. Das Einbringen und Entnehmen jedes Behälters erfordert eine aufwändige Absenk- bzw. Hebebewegung mit gegebenenfalls seitlich exakter Positionierung, was zusätzlichen Raumbedarf und Steuerungsaufwand erfordert. Ferner passt der Träger nur zu einer begrenzten Anzahl unterschiedlich ausgebildeter Behälter, so dass in einer Behälter-Behandlungsvorrichtung, in der wahlweise sehr verschiedene Behälter zu fördern sind, eine entsprechende Anzahl unterschiedlicher Träger oder zumindest Trägereinsätze erforderlich ist, und bei Umstellungen auf andere Behälter zeitaufwändige Umrüstarbeiten auch an den Trägern erforderlich werden. Da häufig eine große Anzahl Träger in der Förderstrecke gebraucht wird, summieren sich diese Umrüstzeiten zu unerwünscht langen Stillstandszeiten der Behälter-Behandlungsvorrichtung. Wenn in den über die Förderstrecke verbundenen Stationen Neckhandling oder ein anderes Handling mit nur horizontalen Relativbewegungen zwischen den Behältern und den sie innerhalb der Station bewegenden Förderelementen ausgeführt wird, ist die Anbindung zwischen den Stationen und der Förderstrecke schwierig, weil der bekannte Träger zusätzlich zum Beladen und Entladen Anhebe- bzw. Absenkbewegungen erfordert, für die in den Stationen selbst gegebenenfalls keine Steuereinrichtungen verfügbar sind. Die Anbindung bedingt dann wegen der Träger hohen baulichen und steuerungstechnischen Aufwand.

Der Erfindung liegt die Aufgabe zugrunde, einen Träger der eingangs genannten Art anzugeben, mit dem verschiedene, auch stark unterschiedlich ausgebildete Behälter wahlweise ohne nennenswerte Umrüstarbeiten ergonomisch günstig handhabbar und beim Transport positionierbar sind.

Die gestellte Aufgabe wird mit den Merkmalen des Patentanspruchs 1 gelöst.

Der Träger ermöglicht ein Neckhandling des Behälters, ohne Förderelemente der Förderstrecke direkt am Behälter angreifen zu lassen. Da sich der Behälter mit im Wesentlichen nur horizontalen Bewegungen in den Träger einbringen und aus diesem entnehmen lässt, kann die Förderstrecke dank der Träger einfach in ein konventionelles Neckhandlingsystem mit Transportsternen eingebunden werden. Der Träger gestattet die bequeme Handhabung sowohl standfähiger als auch nicht standfähiger Behälter und ermöglicht den Transport stark voneinander verschiedener Behälter ohne nennenswertes Umrüsten. Die Behälter können dabei nicht nur im Volumen, in der Größe, der Höhe, der Außenkontur, verschieden sein, sondern auch in ihren Abmessungen im Kopfbereich. Der Träger wird sowohl leer als auch nach Einbringen des Behälters zweckmäßig frei stehend mit Hilfe eines einfache Transporteurs oder eines Transportbandes zu oder durch Behandlungsstationen und/oder - maschinen transportiert, die, z.B., über eigene Förder- oder Manipuliersysteme für die Behälter selbst verfügen. Der Träger und das Verfahren sind besonders geeignet für beispielweise Getränkebehälter, die einem neuen Trend entsprechend direkt in ein Ausschanksystem eingesetzt oder an dieses angeschlossen werden, beispielsweise an einen Bier-Zapfhahn, um unter anderem den Nachteil der häufig notwendigen Reinigung langer, permanent zu einem getrennt aufbewahrten Behälter installierten Förderleitungen zu vermeiden. Der Behälter kann dabei mit einem Anschlussschlauch ausgestattet sein, der bei leerem Behälter mit diesem entfernt wird. Das Fassungsvermögen solcher z.B. aus Kunststoff geblasener Behälter beträgt ein Vielfaches herkömmlicher Getränkeflaschen, wobei die Behälter im Regelfall jedoch nicht standfähig sind und sich abhängig von den Getränkesorten und/oder Ausschanksystemen deutlich voneinander unterscheiden können. An der Basis und/oder an der Halteplatte ist wenigstens ein Positionierelement angeordnet. Vorzugsweise kann dieses Positionierelement in etwa in horizontaler oder vertikaler Ausrichtung auf eine Mittelachse des im Träger hängenden Behälters und/oder des Haltemittels platziert sein. Dieses Positionierelement oder auch mehrere Positionierelemente können dann zur genauen Positionierung des Trägers in der jeweiligen Behälter-Behandlungsstation (z.B. der Füllvorrichtung oder der Verpackungsstation) dienen, damit das Einbringen bzw. Entnehmen des Behälters ordnungsgemäß aufgrund der Zusammenwirkung des Positionierelementes mit der jeweiligen Station bzw. deren Behälterförder- oder Manipuliersystem gewährleistet ist.

Da der Behälter im Träger nur im Kopfbereich abgestützt wird, und die Kopfbereiche selbst stark verschiedener Behälter im Regelfall weniger differieren als z.B. die Behälter-Unterteile oder Maximaldurchmesser, lässt sich der Träger dank des Angriffs am Kopfbereich für sehr viele unterschiedliche Behälterausbildungen verwenden. Dabei wird jeder Behälter mit seinem Kopfbereich im Wesentlichen auf der gleichen Höhe gehalten, unabhängig davon, wie groß, stark oder lang der Behälter ist. Speziell für die erwähnten Behälter entsprechend dem neuen Trend, die nach dem Füllen mit relativ großen und stabilen Verschlusskappen versehen werden, bietet sich für das Haltemittel ein Untergreifen oder Umgreifen der Verschlusskappe an. Der Behälter kann jedoch auch an einem am Behälterhals angeformten kragenartigen Flansch gehalten werden, oder bei entsprechender Formgebung des Behälters im Kopfbereich sogar unterhalb des Halses. Das gegebenenfalls beträchtliche Eigengewicht des gefüllten Behälters stabilisiert diesen zusätzlich im Haltemittel des Trägers, so dass er beispielsweise bequem auf einem Transportband aus einer Füllvorrichtung entlang der Transportstrecke zu einer Verpackungsstation gefördert werden kann. Dabei können die Träger direkt aneinander anstehen und, gegebenenfalls einander stabilisieren, da die Abstützung der Behälter jeweils im Kopfbereich diese so stabilisiert, dass Behälter in angrenzenden Trägern einander nicht kontaktieren. Der Behälter ist so in den Träger einbringbar, dass er in dem Haltemittel hängt, d.h. in seinem unteren Bereich keinen Kontakt mit dem Träger hat. Vorzugsweise erfolgt das Einbringen und Entnehmen des Behälters jeweils mit einer zumindest in etwa parallel zur Förderfläche orientierten, z.B. nur horizontalen Bewegung in das oder aus dem Haltemittel. Dadurch entfallen schwierig zu steuernde und platzbeanspruchende Hebe- und Senkbewegungen, so dass die Förderstrecke einfach sein kann und sich gut an Vorrichtungen mit Fördersystemen mit horizontalen Bewegungssteuerungen anbinden lässt.

Bei einer zweckmäßigen Ausführungsform ist das Haltemittel an zumindest einer von der Basis hochstrebenden Stütze im Abstand oberhalb der Basis angeordnet. Der Abstand wird so groß gewählt, dass selbst die höchsten vorkommenden Behälter problemlos transportiert werden können. Um das Haltemittel relativ zur Basis zu stabilisieren, sind, vorzugsweise, zwei beabstandete Stützen oder Stützenpaare an der Basis vorgesehen. Die Stützen werden z.B. an einer Seite der Basis platziert, die beim Transport auf der Förderstrecke den Behälter-Behandlungsvorrichtungen, z.B. einer Füllvorrichtung und/oder einer Verpackungsvorrichtung abgewandt ist. Bei einer Transportstrecke, der eine Füllvorrichtung und eine Verpackungsvorrichtung jeweils an der Außenseite zugeordnet sind, sollte die Stütze oder sollten die Stützen auf der Seite der Basis platziert sein, die beim Transport zur Innenseite der Transportstrecke weist.

Zweckmäßig ist das Haltemittel wenigstens eine an einer Einführseite offene, vorzugsweise etwa halbkreisförmige, Ausnehmung in einer an der Stütze montierten Halteplatte. Bei einer anderen Ausführungsform ist das Haltemittel wenigstens eine an der Stütze und/oder einer Halteplatte montierte Gabel. Bei einer weiteren Ausführungsform ist das Haltemittel wenigstens eine an der Stütze und/oder einer Halteplatte montierte Greifklammer. Das Haltemittel kann form- und/oder kraftschlüssig an dem Kopfbereich des Behälters angreifen. Zum Abstützen und Halten des Behälters kann dessen Eigengewicht mitherangezogen werden. Bei einer Greifklammer kann diese variable Öffnungsweite besitzen und/oder unterschiedlich weite Greifbereiche, um mit unterschiedlichen Durchmessern in Kopfbereichen unterschiedlicher Behälter zurechtzukommen. Die Gabel kann zur Einbringseite divergierende Schenkel aufweisen.

Zweckmäßig ist die Bodenplatte der Basis zum Aufstellen auf die Förderfläche der Förderstrecke in zumindest einer, vorzugsweise nur einer, vorbestimmten Orientierung in Bezug auf entweder die Innen- und Außenseiten und/oder die Transportrichtung der Förderstrecke gestaltet. Die Bodenplatte erfüllt die Aufgabe der Anpassung des Trägers an die Förderstrecke bzw. deren Förderfläche, wobei sie zweckmäßig in nur einer Orientierung aufstellbar ist, und dabei so gestaltet sein kann, dass sich optimale Stand- und Kippfestigkeit ergeben.

Bei einer zweckmäßigen Ausführungsform weist die Bodenplatte in Transportrichtung hinten- und vorneliegende Umrissabschnitte auf, die mit entsprechenden Umrissabschnitten von Bodenplatten unmittelbar dahinter oder davor auf der Förderfläche frei stehender Träger in einen horizontal und quer zur Transportrichtung wirksamen Formschluss bringbar sind. Die Umrissabschnitte sind bogenförmig, vorzugsweise kreisbogenförmig und abwechselnd konkav und konvex, damit sie sich trotz der gegenseitigen formschlüssigen Abstützung in Kurven der Förderstrecke relativ zueinander bewegen können und auch in Kurven die gegenseitige Stabilisierung der Träger über ihre Bodenplatten aufrechtgehalten bleibt. Auf diese Weise werden beim Hintereinandertransport der Träger diese aneinander stabilisiert und geführt.

Der Träger kann zwischen der Basis und der Halteplatte zumindest in einer Behältereinbring- und -entnahmeseite offen sein, was nicht nur das Einbringen und Entnehmen des Behälters sondern auch den Durchgang durch die oder das Vorbeifahren an der jeweiligen Station begünstigt, wenn dort gegebenenfalls zum Be- und Entladen des Trägers erforderliche Komponenten der Stationen in den "Luftraum" oberhalb der Förderstrecke eingreifen. Bei in den Träger eingebrachtem Behälter sollte sich der Behälterschwerpunkt unterhalb des Eingriffs zwischen dem Kopfbereich und dem Haltemittel befinden.

Ausführungsformen des Erfindungsgegenstandes werden anhand der Zeichnungen erläutert. Es zeigen:
- Fig. 1: eine Draufsicht einer Förderstrecke in einer Behälter-Behandlungsvorrichtung mit zwei Stationen,
- Fig. 2: eine Perspektivansicht eines Trägers zum Transportieren eines Behälters ent- lang einer Förderstrecke, beispielsweise der von Fig. 1,
- Fig. 3: eine Perspektivansicht des Trägers von Fig. 2 mit eingebrachtem Behälter, und
- Fig. 4: eine Schemadraufsicht auf mehrere aneinanderstoßende Träger in der För- derstrecke beim Durchfahren einer Kurve.

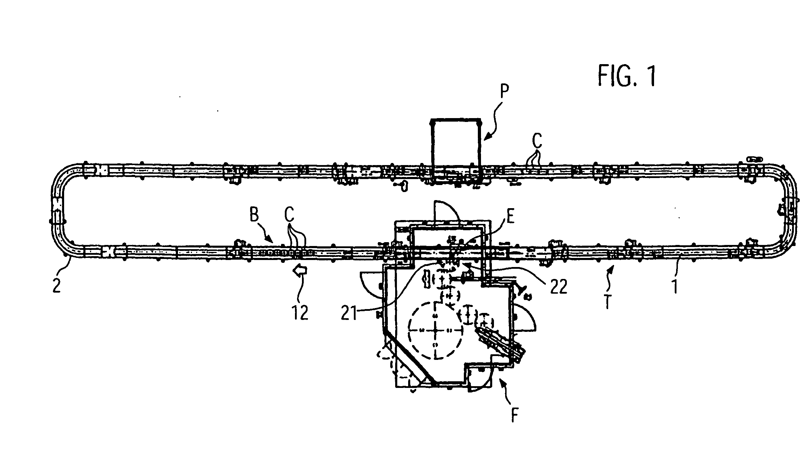

Fig. 1 ist eine schematische Draufsicht einer in dieser Ausführungsform endlosen Förderstrecke T mit einer obenliegenden Förderfläche 1 für den Transport einzeln in Trägern C hängend abgestützt gehaltener Behälter B, beispielsweise Flaschen. Die Träger C werden in dieser Ausführungsform sowohl mit als auch ohne Behälter B direkt aneinanderliegend in einer Förderrichtung 12 entlang der Förderstrecke T gefördert. Die Förderstrecke T ist beispielsweise an zwei Behälter-Behandlungsstationen F, P (z.B. einer Füllvorrichtung und einer Verpackungsvorrichtung) angebunden, derart, dass diese Stationen der Außenseite der Förderstrecke T zugeordnet sind und sich die Förderstrecke T zum Teil durch die Stationen erstreckt. In den Stationen F, P sind beispielsweise Neckhandling-Fördersysteme enthalten, die jeden Behälter B mit einer im Wesentlichen horizontalen Einbringbewegung E in jeweils einen Träger C auf der Förderstrecke T transferieren bzw. aus einem Träger C mit einer im Wesentlichen horizontalen Entnahme-Bewegung entnehmen. In den Vorrichtungen F, P enthaltene Fördersysteme können jedoch auch von anderer Bauart sein. Es muss im Anbindebereich eine Bewegungssteuerung vorgesehen sein, mit der sich zumindest im Wesentlichen horizontale Einbring- und Entnahmebewegungen der Behälter B relativ zu den Trägern C generieren lassen.

Die Förderfläche 1 der Förderstrecke T kann beispielsweise als Schuppen- oder Gliederförderband ausgebildet sein, das auch in Kurven oder Bögen 2 verläuft und, beispielsweise, zumindest bereichsweise an einer oder beiden Seiten Führungsschienen aufweist.

Aus der Station F (beispielsweise einer Füllvorrichtung) werden die Träger C mit den zuvor gefüllten und verschlossenen Behältern B beladen. Die mit den Behältern B beladenen Träger C werden dann entlang der Förderstrecke T, auch durch die Kurven oder Bögen 2, zu der Station P (z.B. einer Verpackungsvorrichtung) transportiert, in der die Behälter B aus den Trägern C entladen werden, ehe die leeren Träger C wiederum entlang der Förderstrecke T in Förderrichtung 12 zurück zur Station F gefördert werden.

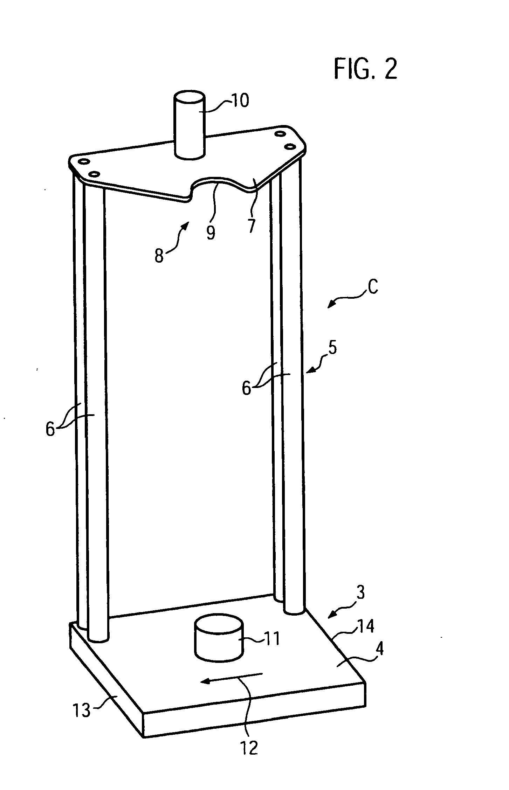

Fig. 2 verdeutlicht eine Ausführungsform eines Trägers C mit einer Basis 3 (z.B. einer Bodenplatte 4), zumindest einer von der Basis 3 hochstrebenden Stütze 5, und einem Haltemittel 8 am oberen Ende der Stütze 5 und im Hochabstand von der Basis 3.

Die Basis 3 ist eine viereckige oder quadratische Bodenplatte 4 mit in Förderrichtung 12 vorne- und hintenliegenden, geraden Umrissabschnitten 13, 14, die beim Transport (Fig. 1) in etwa quer zur Förderstrecke T liegen. Die Stütze 5 wird in der gezeigten Ausführungsform durch zwei beabstandete Stützenpaare 6 (z.B. Rohrabschnitte) gebildet, die als Haltemittel 8 eine Halteplatte 7 mit einer annähernd halbkreisförmigen, einseitig offenen Ausnehmung 9 tragen. Auf der Basis 3 ist ein Positionierelement 11 angeordnet. Gegebenenfalls trägt auch die Halteplatte 7 ein Positionierelement 10. Die Positionierelemente 11, 10 können beispielsweise zylindrische Zapfen oder Rohrabschnitte sein, wobei, beispielsweise, das Positionierelement 11 vertikal auf das Zentrum der Ausnehmung 9 ausgerichtet ist, während das Positionierelement 10 horizontal auf das Zentrum der Ausnehmung 9 ausgerichtet ist.

Das Positionierelement 11 dient beispielsweise zur Zusammenarbeit mit einem Transferstern 21 in der Station F, der im Umriss z.B. mit der Teilung der vorbeipassierenden Träger C angeordnete Umfangsausnehmungen 22 zum Zusammenwirken mit den Positionierelementen 11 besitzt, um beim Beladen jedes Trägers C eine exakte Ausrichtung, beispielsweise zwischen dem Transferstern 21 und dem Träger C, zu erzielen. Das Positionierelement 10 auf der Halteplatte 7 könnte alternativ oder additiv für denselben Zweck oder auch zur vorübergehenden Abstützung des Trägers C gegen Kippen benutzt werden, oder beispielsweise auch zur Positionierung und/oder Abstützung bzw. Führung des Trägers C beim Entladen des Trägers C in der Station P

In dem Träger C in Fig. 2 ist die Stütze 5 bzw. sind die Stützenpaare 6 nahe bei einer Seite der Bodenplatte 4 angeordnet, die bei auf der Förderfläche 1 frei stehenden Träger C zur Innenseite der Förderstrecke T in Fig. 1 weist, so dass der Träger C an seiner Belade- und Entladeseite vollständig offen ist, die zur Station F, P bzw. zur Außenseite der Förderstrecke T weist.

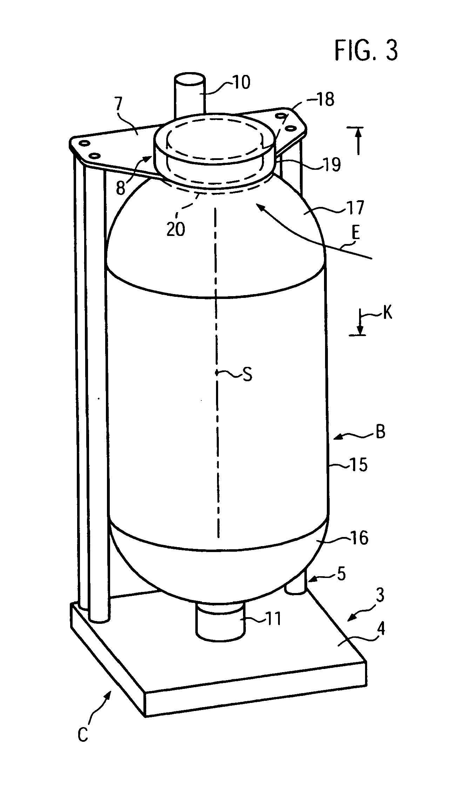

Fig. 3 zeigt ein Transportgebinde, bestehend aus dem Träger C und einem darin hängend abgestützt gehaltenen Behälter B, beispielsweise einer Flasche.

Der Behälter B weist einen Kopfbereich K auf, der beim Transport in dem Träger C oben liegt. Im Kopfbereich K dieses Behälters B gibt es einen Halsbereich 17 mit nach oben abnehmendem Durchmesser, einen Behälterhals 18 mit kleinerem Durchmesser als dem Maximaldurchmesser des Halsbereiches 17, und eine über den Behälterhals 18 gestülpte und festgelegte Verschlusskappe 19. Alternativ oder additiv könnte auch ein den Behälterhals 18 umfassender Haltekragen 20 am Behälter B vorgesehen sein. An den Halsbereich 17 schließt sich nach unten ein im Wesentlichen zylindrischer Abschnitt 15 an, der den Maximaldurchmesser des Behälters B definiert, und ein untenliegender, bombierter Boden 16. Der Behälterschwerpunkt S liegt bei gefülltem Behälter B beispielsweise etwas unterhalb der Höhenmitte des Behälters. Die gezeigte Behälterausbildung ist nur ein nicht beschränkendes Beispiel aus einer großen Vielfalt voneinander verschiedener Behälter, die in dem Träger C wählweise zu dem Haltemittel 8 passen.

Der Behälter B ist in der Einbringrichtung E (Fig. 1) im Wesentlichen horizontal in die Ausnehmung 9 der Halteplatte 7 eingebracht und stützt sich entweder mit der Unterseite des Verschlussdeckels 19 oder dem Haltekragen 20 ab, wobei der Behälterschwerpunkt S deutlich unterhalb des Eingriffs zwischen dem Haltemittel 8 und dem Kopfbereich K des Behälters B liegt. Somit wird der eingeladene Behälter B hängend in den Träger C abgestützt gehalten, ohne beim Transport beispielsweise das Positionierelement 11 oder die Basis 3 zu kontaktieren. Es ist denkbar, den Behälter B die zumindest eine Stütze 5 berühren zu lassen, um ihn zusätzlich abzustützen.

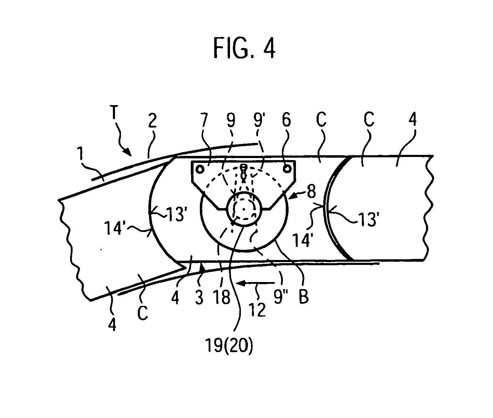

Fig. 4 verdeutlicht in Draufsicht mehrere direkt aneinander entlang der Förderstrecke geförderter Träger C, wobei in dem mittleren Träger C der geladene Behälter B angedeutet ist. Die Bodenplatten 4 der Träger C haben hier in Förderrichtung 12 hinten- und vorneliegende Umrissabschnitte 13', 14', die jeweils paarweise einen Formschluss quer zur Förderrichtung 12 herstellen lassen, um die Träger C aneinander abzustützen. Dieser Eingriff kann mittels Bogenabschnitten bzw. an jeder Bodenplatte 4 zwei abwechselnd konkaven und konvexen Kreisbogenabschnitten so gestaltet sein, dass auch die Bögen oder Kurven 2 der Förderstrecke T durchfahren werden können, wobei sich dann die bogenförmigen Umrissabschnitte 13', 14' gegeneinander verdrehen, ohne den Formschluss zu lösen.

Anstelle des Haltemittels 8 mit der Ausnehmung 9 könnte entweder an der Stütze 5, 6 und/oder an der Halteplatte 7 eine zur Einbringseite divergierende Gabel 9' oder ein an der Stütze 5 und/oder der Halteplatte 7 montierter Klammergreifer 9" montiert sein, der beispielsweise durch eine Feder zu einer Greifstellung beaufschlagt ist und bei der horizontalen Einbringbewegung E durch den Kopfbereich K des Behälters B aufgespreizt wird und diesen klammert und frei hängend hält.

Das Haltemittel 8, d.h. die Ausnehmung 9 bzw. die Gabel 9' oder der Klammergreifer 9", sind so konfiguriert, dass sie zu unterschiedlichen Durchmessern und/oder Formen in Kopfbereichen K unterschiedlich ausgebildeter Behälter B wahlweise passen. Die Höhe des Haltemittels 8 oberhalb der Basis 3 ist zweckmäßig so gewählt, dass auch die höchsten vorkommenden Behälter B problemlos transportiert werden können. Niedrigere Behälter B halten bei Transport einen größeren Abstand zur Basis 3 ein. Alle transportierten Behälter B sind unabhängig von ihrer Höhe, ihrem Volumen oder ihrer Form immer mit demselben Hochabstand des Kopfbereiches K von der Basis 3 des Trägers C im Träger C positioniert, was für die kooperierenden Förder- oder Manipuliersysteme der Stationen P, F zweckmäßig sein kann.

Es ist nicht unbedingt erforderlich, jeden Behälter B mit seiner Mündung nach oben in den Träger C zu laden, sondern es wäre durchaus möglich, den Behälter B mit der Mündung nach unten zu laden.

Es könnte der Träger C so gestaltet sein, dass mit ihm gleichzeitig mindestens zwei Behälter B transportiert werden können. Die Träger C könnten auf der Förderstrecke T mit Zwischenabständen gefördert werden. Die Träger C werden bevorzugt frei stehend gefördert. Sie könnten jedoch auch an einer Förderstrecke aufrecht hängend montiert sein, beispielsweise indem die Stützen 6 an einer Förderkette fixiert werden. Dann könnte gegebenenfalls die Basis 3 weggelassen werden.

## Patentansprüche

1. Träger (C) zum Transportieren wenigstens eines Behälters (B), insbesondere einer Flasche, entlang einer Förderstrecke (T), insbesondere auf einem Transportband, wobei der Träger (C) zum Aufstellen auf eine Förderfläche (1) der Förderstrecke (T) eine Basis (3) und wenigstens ein am Behälter (B) zum Angriff bringbares Haltemittel (8) zum Halten des Behälters (B) zumindest während des Transports mit dem Träger (C) aufweist, und der Behälter (B) beim Transport einen untenliegenden Bereich (15, 16) und einen obenliegenden Kopfbereich (K) besitzt, wobei das Haltemittel (8) zum Angriff an dem Kopfbereich (K) des Behälters (B) ausgebildet und so angeordnet ist, dass der Behälter (B) beim Transport im Haltemittel (8) mit dem Kopfbereich (K) abgestützt ist und von dem Haltemittel (8) nach unten hängt, und die Basis (3) eine Bodenplatte (4) aufweist, **dadurch gekennzeichnet, dass** zur Ausrichtung und/oder Kippabstützung des Trägers (C) in der Förderstrecke (T) an der Basis (3) und/oder an dem Haltemittel (8) wenigstens ein von der Basis (3) und/oder dem Haltemittel (8) vorstehendes Positionierelement (10, 11) angeordnet ist.

2. Träger nach Anspruch 1, **dadurch gekennzeichnet, dass** das Positionierelement (10, 11) in etwa in horizontaler oder vertikaler Ausrichtung auf eine Mittelachse des Kopfbereiches (K) des im Träger (C) hängenden Behälters (B) und/oder des Haltemittels (8) angeordnet ist.

3. Träger nach Anspruch 1, **dadurch gekennzeichnet, dass** das Positionierelement (10, 11) ein Zapfen oder ein Rohrabschnitt ist.

4. Träger nach Anspruch 1, **dadurch gekennzeichnet, dass** das Haltemittel (8) an zwei parallelen von der Basis (3) hochstrebenden beabstandeten Einzelstützen oder Stützenpaaren (6) im Abstand oberhalb der Basis (3) angeordnet ist.

5. Träger nach Anspruch 1, **dadurch gekennzeichnet, dass** das Haltemittel (8) wenigstens eine an einer Einbringseite des Trägers (C) offene, etwa halbkreisförmige Ausnehmung (9) in einer an der Stütze (5) montierten Halteplatte (7) oder wenigstens eine an der Stütze (5) und/oder der Halteplatte (7) montierte Gabel (9') oder wenigstens eine an der Stütze (5) und/oder der Halteplatte (7) montierte Greifklammer (9"), vorzugsweise mit variabler Öffnungsweite und/oder unterschiedlich weiten Greifbereichen, ist.

6. Träger nach wenigstens einem der vorhergehenden Ansprüche, **dadurch gekennzeichnet, dass** die Bodenplatte (4) in Transportrichtung (12) hinten- und vorneliegende, gleiche aber gegensinnige Umrissabschnitte (13', 14') aufweist, und die Umrissabschnitte (13', 14') zum Aufstellen der Bodenplatte (4) auf die Förderfläche (1) in zumindest einer vorbestimmten Orientierung in Bezug auf entweder die Innen- und Außenseiten der Förderstrecke (T) und/oder die Transportrichtung (12) mit entsprechenden Umrissabschnitten (13', 14') von Bodenplatten (4) unmittelbar dahinter oder davor auf der Förderfläche (1) vorhandener Träger (C) in einen, vorzugsweise quer zur Transportrichtung (12) wirksamen, Formschluss bringbar sind.

7. Träger nach Anspruch 6, **dadurch gekennzeichnet, dass** die Umrissabschnitte (13', 14') an der Bodenplatte (4) zwecks gegenseitiger Relativverdrehung der Träger (C) in Kurven (2) der Förderstrecke (T) bogenförmig und abwechselnd konkav und konvex, vorzugsweise kreisbogenförmig, sind.

## Claims

1. Carrier (C) for transporting at least one container (B), in particular a bottle, along a conveyor run (T), in particular on a conveyor belt, which carrier (C) has a base (3) for standing on a conveyor surface (1) of the conveyor run (T) and at least one retaining means (8) which can be fitted so that it engages the container (B) in order to hold the container (B) at least when being conveyed with the carrier (C), and the container (B) has a lower region (15, 16) and an upper head region (K) when being conveyed, and the retaining means (8) is designed to engage the head region (K) of the container (B) and is disposed so that the container (B) is supported in the retaining means (8) by the head region (K) when being conveyed and hangs down from the retaining means (8), and the base (3) has a base plate (4), **characterised in that** at least one positioning element (10, 11) is provided on the base (3) and/or on the retaining means (8) projecting out from the base (3) and/or the retaining means (8) in order to align the carrier (C) and/or prevent it from tilting in the conveyor run (T).

2. Carrier as claimed in claim 1, **characterised in that** the positioning element (10, 11) is disposed in an approximately horizontal or vertical orientation on a mid axis of the head region (K) of the container (B) hanging in the carrier (C) and/or the retaining means (8).

3. Carrier as claimed in claim 1, **characterised in that** the positioning element (10, 11) is a pin or a tubular portion.

4. Carrier as claimed in claim 1, **characterised in that** the retaining means (8) is disposed on two parallel, spaced apart individual supports or support pairs (6) extending up from the base (3) at a distance above the base (3).

5. Carrier as claimed in claim 1, **characterised in that** the retaining means (8) is at least one approximately semi-circular recess (9) in a retaining plate (7) mounted on the support (5) open at an insertion side of the carrier (C) or at least one fork (9') mounted on the support (5) and/or the retaining plate (7) or at least one gripping clamp (9") mounted on the support (5) and/or the retaining plate (7), preferably with a variable opening width and/or gripping regions of differing widths.

6. Carrier as claimed in at least one of the preceding claims, **characterised in that** the base plate (4) has identical but inverse contoured portions (13', 14') at the rear and at the front in the conveying direction (12) and the contoured portions (13', 14') can be placed in at least one predefined orientation relative to either the inner and outer sides of the conveyor run (T) and/or the conveying direction (12) in order to stand the base plate (4) on the conveyor surface (1) in a positively fitting arrangement, preferably acting transversely to the conveying direction (12), with matching contoured portions (13', 14') of base plates (4) of carriers (C) on the conveyor surface (1) immediately behind or in front.

7. Carrier as claimed in claim 6, **characterised in that** the contoured portions (13', 14') on the base plate (4) are of a curved shape and alternately concave and convex, preferably arcuately shaped, to permit a mutual relative turning of the carriers (C) in bends (2) of the conveyor run (T).

## Revendications

1. Support (C) pour le transport d'au moins un récipient (B), en particulier une bouteille, le long d'une trajectoire de transport (T), en particulier sur une bande transporteuse, étant précisé que le support (C) présente, pour être posé sur une surface de transport (1) de ladite trajectoire (T), une base (3) et au moins un moyen de retenue (8) apte à venir en prise avec le récipient (B) et destiné à tenir celui-ci au moins pendant le transport avec le support (C), et que le récipient (B), lors du transport, a une zone inférieure (15, 16) et une zone supérieure (K) , et étant précisé que le moyen de retenue (8) est conçu pour venir en prise avec la zone supérieure (K) du récipient (B) et est disposé de telle sorte que le récipient (B), lors du transport, soit en appui avec sa zone supérieure (K) dans le moyen de retenue (8) et soit suspendu vers le bas à celui-ci, et que la base (3) présente une plaque inférieure (4), **caractérisé en ce que** pour orienter et/ou soutenir à l'encontre d'un basculement le support (C) sur la trajectoire de transport (T), il est prévu sur la base (3) et/ou sur le moyen de retenue (8) au moins un élément de positionnement (10, 11) qui dépasse de la base (3) et/ou du moyen de retenue (8).

2. Support selon la revendication 1, **caractérisé en ce que** l'élément de positionnement (10, 11) est disposé à peu près à l'horizontale ou à la verticale sur un axe médian de la zone supérieure (K) du récipient (B) suspendu dans le support (C) et/ou du moyen de retenue (8).

3. Support selon la revendication 1, **caractérisé en ce que** l'élément de positionnement (10, 11) est constitué par une cheville ou une section tubulaire.

4. Support selon la revendication 1, **caractérisé en ce que** le moyen de retenue (8) est disposé à une certaine distance au-dessus de la base (3), sur deux montants individuels ou paires de montants (6) parallèles et espacés qui se dressent sur ladite base (3).

5. Support selon la revendication 1, **caractérisé en ce que** le moyen de retenue (8) est constitué par au moins un creux (9) à peu près semi-circulaire, ouvert sur un côté d'introduction du support (C), qui est prévu dans une plaque de retenue (7) montée sur le montant (5), ou par au moins une fourche (9') montée sur le montant (5) et/ou sur la plaque de retenue (7), ou par au moins un crampon (9") monté sur le montant (5) et/ou sur la plaque de retenue (7), de préférence avec une largeur d'ouverture variable et/ou des zones de préhension de largeurs différentes.

6. Support selon l'une au moins des revendications précédentes, **caractérisé en ce que** la plaque inférieure (4) présente des parties de contour (13', 14') avant et arrière, dans le sens de transport (12), qui sont identiques mais en sens inverse, et ces parties de contour (13', 14), pour que ladite plaque inférieure (4) soit posée sur la surface de transport (1) suivant au moins une orientation prédéfinie, par rapport aux côtés intérieur et extérieur de la trajectoire de transport (T) et/ou au sens de transport (12), sont aptes à être reliées efficacement par complémentarité de forme, de préférence transversalement par rapport au sens de transport (12), aux parties de contour (13', 14') correspondantes de plaques inférieures (4) placées juste après ou juste avant sur la surface de transport (1) de supports (C) existants.

7. Support selon la revendication 6, **caractérisé en ce que** les parties de contour (13', 14') sur la plaque inférieure (4), pour une rotation relative mutuelle des supports (C) dans les courbes (2) de la trajectoire de transport (T), sont courbes et en alternance concaves et convexes, de préférence en forme d'arcs de cercle.
